# EUROPÄISCHE PATENTSCHRIFT

(11) **EP 2 243 349 B1**
(45) Veröffentlichungstag und Bekanntmachung des Hinweises auf die Patenterteilung: **09.05.2018**
(21) Anmeldenummer: 10156882.2
(22) Anmeldetag: 18.03.2010
(51) Int. Cl.: A01F 15/08, A01F 15/07

(54) **Rundballenpresse**
Round baling press
Presse à ballots ronds

(30) Priorität: 23.04.2009 DE 102009002585
(43) Veröffentlichungstag der Anmeldung: 27.10.2010
(73) Patentinhaber: Deere & Company, Moline, IL 61265 (US)
(72) Erfinder: Viaud, Jean, 70100 Gray (FR)
(74) Vertreter: Holst, Sönke

(56) Entgegenhaltungen:
- EP-A1- 1 214 874
- DE-U1- 29 706 540
- US-A- 4 763 464
- US-A- 5 367 865

## Beschreibung

Die Erfindung betrifft eine Rundballenpresse zur Herstellung von Ballen, mit:
einer Ballenbildungskammer,
mindestens einer antreibbaren Walze, die einen Teil des Umfangs der Ballenbildungskammer begrenzt und an einem beweglichen Halter befestigt ist, und
einem antreibbaren, endlosen, flexiblen Pressmittel, das einen weiteren Teil des Umfangs der Ballenbildungskammer begrenzt und an einem ersten Drehkörper und einem zweiten Drehkörper anliegt, von denen der erste Drehkörper am Halter angebracht ist,
wobei der zweite Drehkörper durch eine die Position des zweiten Drehkörpers zwangsweise mit der Position des Halters koppelnde Antriebsverbindung bewegungsmäßig mit dem Halter gekoppelt ist und der zweite Drehkörper durch ein Spannungserzeugungsmittel vorgespannt ist, um das Pressmittel zu straffen.

### Stand der Technik

Ballenpressen dienen in der Landwirtschaft dazu, Erntegut von einem Feld aufzunehmen und es zu einem Ballen zu formen. Neben Quaderballenpressen, bei denen ein Presskolben das Erntegut zyklisch in einer Presskammer verdichtet, sind Rundballenpressen gebräuchlich, bei denen das aufgenommene Erntegut in eine zylindrischen Ballenbildungskammer eingebracht und dort durch angetriebene Elemente in Drehung versetzt wird. Bei Rundballenpressen sind Ausführungsformen mit fester Ballengröße bekannt, bei denen der Umfang der Ballenbildungskammer durch fest mit dem Rahmen der Ballenpresse verbundene Rollen oder Drehkörpern begrenzt wird, und Ausführungsformen mit variabler Ballengröße, bei denen ein flexibles Pressmittel in Form von Riemen oder mit Mitnehmerelementen ausgestatteten Ketten den Umfang der Ballenbildungskammer begrenzt. Das Pressmittel wird durch einen Hydraulikzylinder vorgespannt, der an einem eine Walze, an der das Pressmittel anliegt, tragenden Arm mit einer Kraft beaufschlagt, so dass die Größe der Ballenbildungskammer mit der aufgenommenen Materialmenge anwächst. Bei Erreichen einer vorbestimmten Größe oder Dichte des Ballens wird der Ballen mit einem Band oder einer Folie umwickelt und dann eine Rücktür geöffnet und der Ballen aus der Ballenbildungskammer ausgeworfen.

Die US 5 367 865 A1 beschreibt eine Rundballenpresse, bei der die Ballenbildungskammer nach vorn durch mehrere rotativ antreibbare Walzen begrenzt wird, die nebeneinander an einem um die Drehachse der untersten Walze schwenkbaren Halter angebracht sind. Nach hinten wird die Ballenbildungskammer durch einen Riemen begrenzt, der um mehrere Rollen umläuft. Eine dieser Rollen ist an der Oberseite des Halters angebracht und wird nicht angetrieben. Zwei weitere, vom Riemen umschlungene Rollen sind an einem ersten Arm angebracht, der um eine Achse schwenkbar ist und mit einem zweiten Arm gekoppelt ist, an dem ein anderen Endes am Rahmen der Rundballenpresse angelenkter Hydraulikzylinder angreift, der zur Bereitstellung einer definierten Zugspannung im Riemen dient. Wenn sich das Erntegut in der Ballenbildungskammer ansammelt, schwenkt der Halter mit den Walzen nach und nach um die Drehachse der unteren Walze nach oben. Gleichzeitig bildet der Riemen im rückwärtigen Bereich der Ballenpresse eine sich vergrößernde Schlaufe. Da der Riemen auch die am Halter befestigte Rolle umschlingt, bewegen sich der Halter und der Riemen in koordinierter Weise nach außen. Da der Riemen auch um Rollen umläuft, die an einer rückwärtigen Tür befestigt sind, reicht der Schwenkbereich des ersten Arms aus, um eine hinreichende Spannung des Riemens auch beim Auswerfen des Ballens zu erzielen.

Die US 6 094 900 A1 zeigt eine Rundballenpresse, deren Ballenbildungskammer ebenfalls nach vorn durch an einem schwenkbaren Halter angebrachte Walzen und nach hinten durch einen Riemen begrenzt wird. Der Halter ist gegenüber dem Rahmen der Ballenpresse durch einen Hydraulikzylinder abgestützt und ist weiterhin nach hinten und oben verlängert und trägt an seinem hinteren, oberen Ende zwei Rollen, um welche der Riemen geschlungen ist. Der Hydraulikzylinder stützt somit den Halter am Rahmen ab und definiert auch die Zugspannung des Riemens. Der Riemen läuft auch um Rollen um, die an einer rückwärtigen Tür befestigt sind, so dass der Schwenkbereich des Halters ausreicht, um eine hinreichende Spannung des Riemens auch beim Auswerfen des Ballens zu erzielen.

In der US 7 165 491 B2 wird eine weitere Rundballenpresse beschrieben, deren Ballenbildungskammer nur durch ein einziges Pressmittel in Form von Riemen begrenzt wird. Die Riemen laufen um mehrere Umlenkrollen um, von denen einige an einem ersten, schwenkbaren Arm und andere an einem zweiten, schwenkbaren Arm angebracht sind. Die Arme sind gegeneinander durch einen Hydraulikzylinder vorgespannt, der zur Erzeugung der gewünschten Spannung im Pressmittel dient. Das Pressmittel läuft außerdem um zwei an der Unterseite der Ballenpresse an einem schwenkbaren Träger angebrachte Umlenkrollen um. Der Träger kann um seine sich parallel zur Achse der Ballenbildungskammer erstreckende Achse nach hinten und oben in eine Ballenauswurfposition verschwenkt werden. Die beiden Arme ermöglichen es, den Riemen auch in der Ballenauswurfposition des Trägers hinreichend straff zu halten.

Die EP 1 308 078 A1 beschreibt eine Rundballenpresse, deren Ballenbildungskammer nach vorn durch antreibbare Walzen, von denen eine an einem schwenkbaren Halter angebracht sind, und ansonsten durch ein einziges Pressmittel in Form von Riemen begrenzt wird. Das Pressmittel läuft unter Anderem um eine mit dem Halter verbundene Umlenkrolle, um eine an einem Spannarm angebrachte Umlenkrolle und um zwei an der Unterseite der Ballenpresse an einem schwenkbaren Träger angebrachte Umlenkrollen um. Der Träger kann um seine sich parallel zur Achse der Ballenbildungskammer erstreckende Achse nach hinten und oben in eine Ballenauswurfposition verschwenkt werden. Hier ist ein relativ langer Spannarm erforderlich, um die Spannung des Riemens auch in der Ballenauswurfposition des Trägers aufrecht zu erhalten.

Die als gattungsbildend angesehene EP 1 214 874 A1 beschreibt eine Rundballenpresse, bei welcher mehrere angetriebene Rollen an der Vorderseite des Ballenpressraums an einem Halter befestigt sind, der um die Drehachse der unteren Rolle schwenkbar angelenkt ist. Ein vorgespannter Riemen begrenzt den Ballenpressraum nach oben und läuft um zwei weitere, am Halter befestigte Rollen um.

### Aufgabe

Das der Erfindung zu Grunde liegende Problem wird darin gesehen, eine Rundballenpresse bereitzustellen, die eine gegenüber dem Stand der Technik verbesserte Mechanik zur Erzeugung und Aufrechterhaltung der Spannung des Pressmittels aufweist.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine Rundballenpresse umfasst eine zylindrische Ballenbildungskammer, deren Umfang durch mindestens eine antreibbare Walze und durch ein flexibles Pressmittel begrenzt wird. Die Walze ist an einem beweglichen Halter angebracht, so dass der Halter und die Walze sich mit anwachsender Größe eines entstehenden Ballens nach außen bewegen können, sei es auf einer linearen Bahn oder einer Kurvenbahn. Das Pressmittel, bei dem es sich beispielsweise um einen einzigen, hinreichend breiten Riemen oder mehrere Riemen oder um eine oder mehrere Ketten mit daran angebrachten Mitnehmern handeln kann, liegt an einem ersten Drehkörper und einem zweiten Drehkörper an und umrundet beide zumindest teilweise. Der erste Drehkörper ist mit dem Halter verbunden und bewegt sich mit ihm mit, wenn der Ballen anwächst. Der zweite Drehkörper ist ebenfalls gegenüber dem Rahmen der Rundballenpresse beweglich und durch eine Antriebsverbindung bewegungsmäßig mit dem Halter gekuppelt. Wenn sich der Halter mit anwachsender Größe des Ballens nach außen bewegt, wird somit durch die Antriebsverbindung auch der zweite Drehkörper zwangsbewegt, so dass seine Position in geeigneter Weise an die anwachsende Größe des Ballens angepasst werden kann.

Die Spannung des Pressmittels wird durch ein Spannungserzeugungsmittel definiert, das zur Erzeugung einer Zugspannung im Pressmittel in den Antriebsstrang zwischen dem Halter und dem zweiten Drehkörper eingefügt ist. Demnach bewegt sich ein Ende des Spannungserzeugungsmittels mit dem Halter und das andere Ende des Spannungserzeugungsmittels mit dem zweiten Drehkörper. Auf diese Weise wird gleichzeitig eine definierte Zugspannung im Pressmittel erzeugt und eine definierte Kraft auf den Halter ausgeübt, so dass der Ballen in kontrollierter Weise anwachsen kann.

Das Spannungserzeugungsmittel kann eine Feder und/oder einen Hydraulikzylinder aufweisen. Letzterer kann mit einem Druckbegrenzungsventil verbunden werden, um einen definierten Druck im Hydraulikzylinder und somit eine gewünschte Spannung im Pressmittel zu erzielen. Hierzu sei auf den Stand der Technik nach US 6 094 900 A1 verwiesen. Bei einer bevorzugten Ausführungsform der Erfindung ist der Halter um eine sich parallel zur Achse der Ballenbildungskammer, d. h. horizontal und quer zur Vorwärtsrichtung der Rundballenpresse erstreckende Achse schwenkbar am Rahmen der Rundballenpresse angelenkt, und zwar vorzugsweise an seinem vorderen, unteren Ende. Die Antriebsverbindung kann einen ersten Arm umfassen, der am Halter befestigt ist und sich quer zum Halter erstreckt, d. h. bei leerer Ballenbildungskammer und einem sich dann von der Achse schräg nach oben und hinten erstreckenden Halter oberhalb und möglicherweise in Vorwärtsrichtung der Rundballenpresse vor dem Halter befindet. Außerdem kann die Antriebsverbindung einen zweiten Arm aufweisen, an dem der zweite Drehkörper abgestützt ist. Der zweite Arm ist vorzugsweise um eine sich parallel zur Achse der Ballenbildungskammer erstreckende Achse schwenkbar am Rahmen der Rundballenpresse angelenkt. Diese Achse befindet sich in Vorwärtsrichtung der Rundballenpresse vor dem zweiten Drehkörper. Ein Hebelarm kann starr mit dem zweiten Arm verbunden werden. Das Spannungserzeugungsmittel wird dann vorzugsweise zwischen dem ersten Arm und dem Hebelarm angebracht, wobei es mit beiden um sich parallel zur Achse der Ballenbildungskammer erstreckende Achsen schwenkbar angelenkt werden kann.

An das zwischen dem ersten und zweiten Drehkörper befindliche Trum des Pressmittels können sich weitere Trums anschließen, die außerdem an starr am Rahmen der Rundballenpresse abgestützten Drehkörpern anliegen. Weiterhin kann das Pressmittel zwischen zwei weiteren

Drehkörpern hindurch laufen, die am Halter angebracht sind. Einer dieser Drehkörper kann einen unerwünschten Kontakt des Pressmittels mit einer der Walzen des Halters verhindern, während der andere Drehkörper das Pressmittel in der Ballenauswurfposition abstützt.

Die vorliegende Erfindung kann an Rundballenpressen mit einer Rücktür verwendet werden, wie sie in der US 5 367 865 A1 oder der US 6 094 900 A1 beschrieben wird, d. h. eine rückwärtige, aufklappbare Hälfte des Gehäuses der Rundballenpresse bildet und an ihrer Unterseite einen Drehkörper umfasst, um den das Pressmittel umläuft. Eine derartige Rücktür bewirkt in ihrer Ballenauswurfposition ein hinreichendes Anheben und Straffen des Pressmittels, das ein unproblematisches Auswerfen des Ballens ermöglicht. Die vorliegende Erfindung lässt sich auch vorteilhaft an Rundballenpressen mit einem schwenkbarer Träger verwenden, der um eine sich parallel zur Achse der Ballenbildungskammer erstreckende Achse am Rahmen der Ballenpresse angelenkt und durch einen Aktor zwischen einer Ballenbildungsposition, in der er sich im unteren, rückwärtigen Bereich der Rundballenpresse befindet, und einer um die Achse verschwenkte, angehobenen Ballenauswurfposition bewegbar ist. Der Träger stützt im Abstand von der Achse an seiner Außenseite zwei Drehkörper ab, an denen das Pressmittel anliegt. Die Antriebsverbindung zwischen dem Halter und dem zweiten Drehkörper, insbesondere das Spannungserzeugungsmittel, ermöglicht es, den zweiten Drehkörper in eine Position zu verbringen, in der er das Pressmittel auch bei einem in die Ballenauswurfposition verbrachtem Träger hinreichend straff hält, um den Ballen auswerfen zu können. Der Halter kann, wenn sich der Träger in der Ballenauswurfposition befindet, in seiner bei der Bildung des Ballens zuletzt eingenommenen Stellung oder einer weitest möglich angehobenen Stellung arretiert werden.

### Ausführungsbeispiel

In den Zeichnungen ist ein nachfolgend näher beschriebenes Ausführungsbeispiel der Erfindung dargestellt. Es zeigt:
- Fig. 1: eine schematische Seitenansicht einer Rundballenpresse mit leerer Ballenbildungskammer,
- Fig. 2: eine Seitenansicht der Rundballenpresse aus Figur 1 mit teilweise gefüllter Ballenbildungskammer,
- Fig. 3: eine Seitenansicht der Rundballenpresse aus Figur 1 mit komplett gefüllter Ballenbildungskammer,
- Fig. 4: eine Seitenansicht der Rundballenpresse aus Figur 1 beim Auswurf des Ballens, und
- Fig. 5: ein Hydraulikdiagramm der Rundballenpresse.

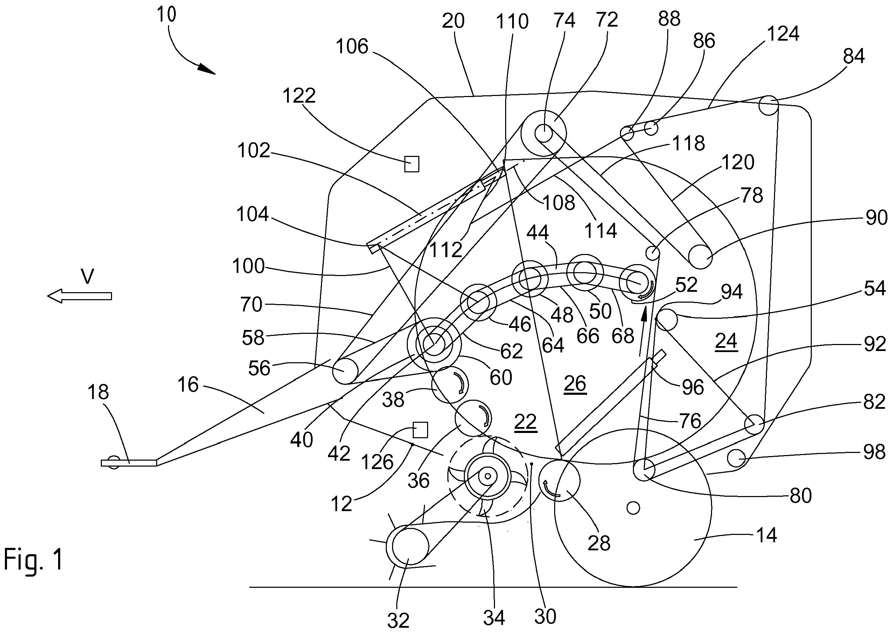

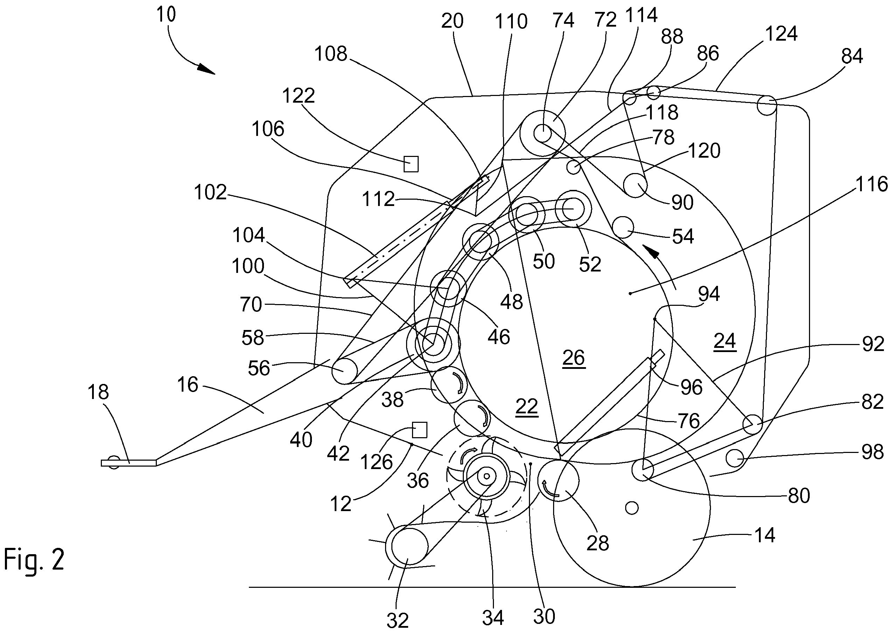

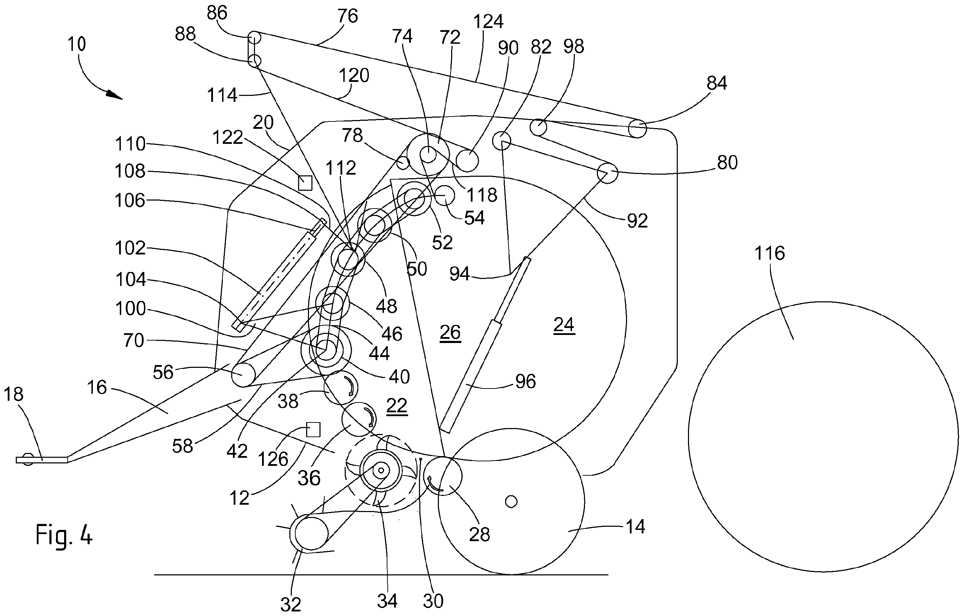

In der Figur 1 ist eine Ballenpresse 10 in einer schematischen Seitenansicht dargestellt. Die Ballenpresse 10 umfasst einen Rahmen 12, der sich durch Räder 14 auf dem Erdboden abstützt und an dessen Vorderseite eine Deichsel 16 angebracht ist, die mittels einer vorderen Zugöse 18 an einem Kupplungsmaul eines Zugfahrzeugs (nicht dargestellt) ankuppelbar ist. Die Ballenpresse 10 wird durch ein Gehäuse 20 nach außen hin abgedeckt und umschlossen, dessen Oberseite und Rückseite jedoch offen sind, wie später anhand der Figuren 2 und 4 erläutert wird. Im Folgenden beziehen sich Richtungsangaben, wie vorn, hinten, oben und unten, auf die Vorwärtsrichtung V, die in den Figuren 1 bis 4 von rechts nach links verläuft.

Innerhalb der Ballenpresse 10 wird eine Ballenbildungskammer 26 nach unten durch eine antreibbare Walze 28 begrenzt, an die sich nach vorn eine Öffnung 30 anschließt, durch die vom Erdboden mittels eines Aufnehmers 32 aufgenommenes und durch einen sich anschließenden Förderrotor 34 nach hinten und oben gefördertes Erntegut in die Ballenbildungskammer 26 eingeführt werden kann. Zur Seite wird die Ballenbildungskammer durch vordere Seitenwände 22 und rückwärtige Seitenwände 24 begrenzt, wobei die vorderen Seitenwände 22 vorzugsweise starr am Rahmen 12 befestigt sind, während die hinteren Seitenwände 24 zur Reduzierung der Reibung beim Auswerfen eines Ballens durch geeignete Aktoren vorzugsweise geringfügig nach außen bewegt werden können. Oberhalb und vor der Öffnung 30 sind zwei weitere Walzen 36, 38 angeordnet, die wie die Walze 28 antreibbar und starr am Rahmen 12 abgestützt sind. Oberhalb der oberen Walze 38 ist eine Walze 40 angeordnet, um deren Drehachse 42 ein im Wesentlichen kreisbogenförmiger Halter 44 drehbar gelagert ist. Der Halter 44 trägt weitere vier angetriebene Walzen 46, 48, 50 und 52 und drei frei laufende Drehkörper 54, 78, 90.

Ein vom Zugfahrzeug her angetriebener Antriebsstrang treibt über eine Riemenscheibe 56, einen Riemen 58 und eine Riemenscheibe 60 die Walze 40 und über weitere Riementriebe 62, 64, 66, 68 die Walzen 46, 48, 50 und 52 an. Außerdem treibt der vom Zugfahrzeug her angetriebene Antriebsstrang die Walzen 28, 36 und 38 sowie den Aufnehmer 32 und den Förderrotor 34 an, und über einen Riemen 70 eine Riemenscheibe 72 für den Antrieb eines Pressmittelantriebsdrehkörpers 74.

Nach hinten wird die Ballenbildungskammer 26 durch ein flexibles, endloses Pressmittel 76 begrenzt, das um den Pressmittelantriebsdrehkörper 74, die Drehkörper 54, 78 und 90, sowie um Drehkörper 80, 82, 84, 86 und 88 umläuft. Bei dem flexiblen Pressmittel 76 kann es sich um einen oder mehrere Riemen oder um eine oder mehrere Ketten mit daran angebrachten Mitnehmern handeln. Falls ein oder mehrere Riemen verwendet werden, sind die Drehkörper 54, 74, 78, 80, 82, 84, 86, 88 und 90 als Rollen oder Walzen ausgeführt, und falls Ketten mit Mitnehmern als Pressmittel verwendet werden, sind sie als auf einer Welle oder Achse sitzende Kettenritzel ausgeführt. Die Drehkörper 78 und 90 sind, wie der Drehkörper 54, am Halter 44 angebracht und bewegen sich mit ihm um die Drehachse 42. Sämtliche Walzen und Drehkörper 28, 36, 38, 40, 46, 48, 50, 52, 74, 78, 80, 82, 84, 86, 88 und 90 erstrecken sich horizontal und quer zur Vorwärtsrichtung V, sind um ihre Achsen drehbar gelagert und erstrecken sich über die Breite der Ballenbildungskammer 26. Die im unteren Bereich des flexiblen Pressmittels 76 befindlichen Drehkörper 80 und 82 sind an einem dreieckförmigen Träger 92 angebracht, der an seiner oberen Spitze 94 um eine sich horizontal und quer zur Vorwärtsrichtung erstreckende Achse schwenkbar am Rahmen 12 angelenkt und durch wenigstens einen fremdkraftbetätigten Aktor 96 um diese Achse bewegbar ist. Der Träger 92 haltert auch einen weiteren Drehkörper 98 unterhalb des Pressmittels 76. Die Drehkörper 74 und 84 sind drehbar, aber ansonsten unbeweglich am Rahmen 12 angebracht.

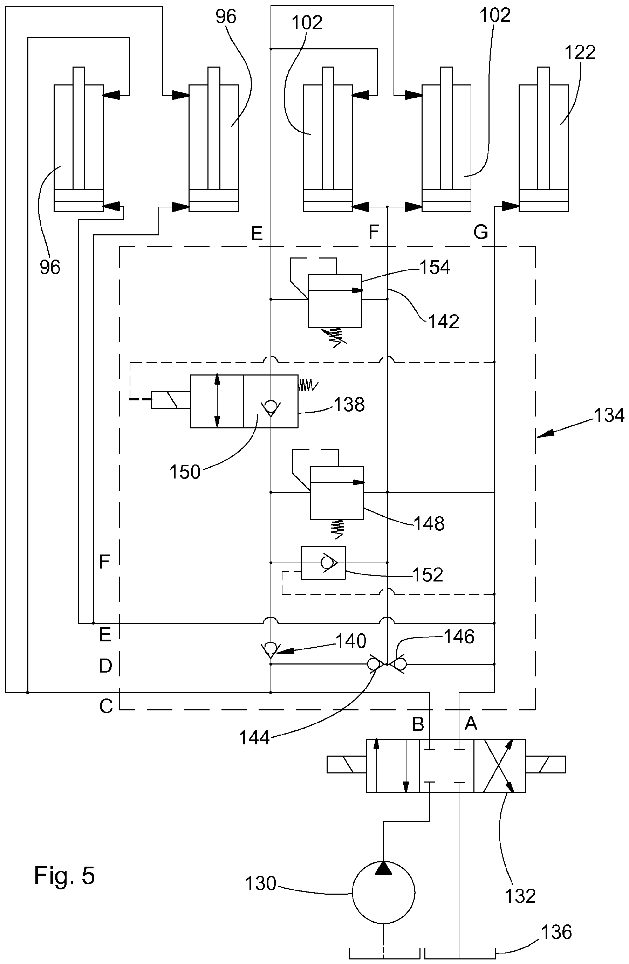

Am Halter 44 ist ein erster, sich quer zur Verbindungslinie zwischen den Walzen 40 und 46 nach oben und vorn erstreckender, erster Arm 100 angebracht, an dessen äußerem, vom Halter abgewandten Ende ein Spannungserzeugungsmittel 102 in Form eines Hydraulikzylinders um eine sich horizontal und quer zur Vorwärtsrichtung und demnach parallel zur Achse der Ballenbildungskammer 26 erstreckende Achse 104 schwenkbar angelenkt ist. Der bewegliche Ausgang 106 des Spannungserzeugungsmittels 102 ist um eine sich parallel zur Achse der Ballenbildungskammer 26 erstreckende Achse 108 schwenkbar an einem Hebelarm 110 angelenkt, welcher seinerseits um eine sich parallel zur Achse der Ballenbildungskammer 26 erstreckende Achse 112 schwenkbar am Rahmen 12 angelenkt und starr mit einem zweiten Arm 114 verbunden ist, der an seinem äußeren Ende die hintereinander angeordneten Drehkörper 88 und 86 trägt. Die Arme 100 und 114, der Hebelarm 110 und das Spannungserzeugungsmittel 102 bilden eine Antriebsverbindung zwischen dem Halter 44 und den Drehkörpern 88 und 86, welche die Position der Drehkörper 88, 86 zwangsweise mit der Position des Halters 44 koppelt. Mit dem sich vergrößernden Ballen in der Ballenbildungskammer 26 und dem sich dadurch nach außen bewegenden Halter 44 werden demnach die Drehkörper 88, 86 zwangsweise nachgeführt und stellen die gewünschte Spannung des Pressmittels 76 bereit. Das Spannungserzeugungsmittel 102 wird durch eine geeignete Ventilsteuerung derart unter Druck gesetzt, dass die gewünschte Spannung des Pressmittels 76 erzeugt wird. Diese Ventilsteuerung umfasst vorzugsweise ein Druckbegrenzungsventil 154, das den gewünschten Druck in der Kolbenstangenkammer des Hydraulikzylinders und die gewünschte Spannung des Pressmittels 76 aufrecht erhält. Eine geeignete Schaltung ist in der Figur 5 dargestellt.

Ausgehend vom Pressmittelantriebsdrehkörper 74 erstreckt sich das Pressmittel 76 um den am Halter 44 abgestützten Drehkörper 90, um die am zweiten Arm 114 abgestützten Drehkörper 88, 86, um den rahmenfesten Drehkörper 84, um die am Träger 92 abgestützten Drehkörper 82, 80 und um den am Halter 44 abgestützten Drehkörper 78, der dazu dient, das Pressmittel 76 von der Walze 52 abzuhalten. Die Funktion der Drehkörper 54 und 98 wird später anhand der Figuren 2 und 4 deutlich. Im Ballenbildungsbetrieb dreht sich der Pressmittelantriebsdrehkörper 74 im Uhrzeigersinn, so dass sich das die Ballenbildungskammer 26 nach hinten begrenzende Trum des Pressmittels 76 nach oben bewegt. Die Walzen 28, 36, 38, 40, 46, 48, 52 drehen sich ebenfalls im Uhrzeigersinn, so dass das in die Ballenbildungskammer 26 eingeführte Erntegut auf einen spiralförmigen Weg im Gegenuhrzeigersinn gebracht wird. Es wären aber auch entgegen gesetzte Drehrichtungen denkbar. Bei leerer Ballenbildungskammer 26 liegt der Träger 44 auf einem unteren Anschlag (nicht gezeigt) auf.

Nach alledem ergibt sich folgende Funktionsweise der Rundballenpresse 10. In der Figur 1 ist die Ballenbildungskammer 26 leer und im Erntebetrieb wird die Rundballenpresse 10 durch das Zugfahrzeug (nicht gezeigt) über ein Feld gezogen, von dem sie in einem Schwad abgelegtes Erntegut mittels des Aufnehmers 32 aufnimmt und es über den Förderrotor 34 in die Ballenbildungskammer 26 einführt, in welcher es durch das sich nach oben bewegende Pressmittel 76 und die rotierenden Walzen 28, 36, 38, 40, 46, 48, 52 auf die erwähnte, spiralförmige Bahn im Gegenuhrzeigersinn gebracht wird.

Es entsteht somit ein sich nach und vergrößernder Ballen 116, wie in der Figur 2 dargestellt ist. Dort ist erkennbar, dass der Halter 44 aufgrund des sich in der Ballenbildungskammer 26 bildenden Ballens 116 um einige 10° um die Achse 42 im Gegenuhrzeigersinn nach oben geschwenkt ist, und mit ihm die Drehkörper 54, 78, 90. Die Trums 118 und 112 des Pressmittels 76 zwischen dem Drehkörper 90 und dem Pressmittelantriebsdrehkörper 74 einerseits und dem Drehkörper 88 andererseits gegenüber der in Figur 1 dargestellten, leeren Ballenbildungskammer 26 verkürzt, da der Drehkörper 90 mit dem Halter 44 nach oben geschwenkt ist. Gleichzeitig ist auch der Drehkörper 88 mit dem zweiten Arm 114 um die Achse 112 nach oben geschwenkt, bedingt durch die Bewegung des ersten Arms 100 und eine in die entgegen gesetzte Richtung führende Ausstreckbewegung des Ausgangs 106 des Spannungserzeugungsmittels 102, die durch den in der Kolbenstangenkammer des Spannungserzeugungsmittels wirkenden, durch das Druckbegrenzungsventil 154 begrenzten Druck entstanden ist. Die bei den Bewegungen der Drehkörper 86 und 90 freigewordenen Länge des Pressmittels 76 umschlingt den rückwärtigen Teil des Ballens 116 und ist nach hinten ausgewölbt. Demgemäß umrundet das Pressmittel 76 den Drehkörper 54 teilweise, da letzterer eine obere, rückwärtige Begrenzung des die Ballenbildungskammer 26 umschließenden Bereichs des Pressmittels 76 bildet. Das Gehäuse 20 ist oben offen, so dass die Drehkörper 88, 86 nach oben aus ihm heraustreten können.

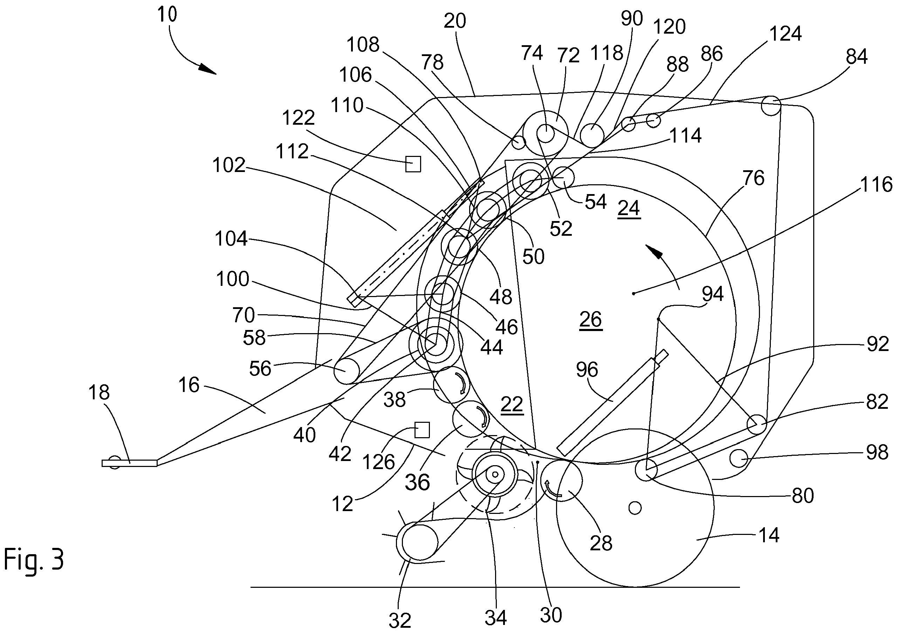

In der in Figur 3 dargestellten Situation ist der Ballen 116 auf die maximal mögliche Größe angewachsen und der Träger 44 kommt an einem oberen Anschlag (nicht gezeigt) zum Anliegen. Gegenüber der Lage in Figur 2 ist der Träger 44 noch weiter um die Achse 42 nach oben geschwenkt, so dass die Drehkörper 54 und 90 (und der nun funktionslose Drehkörper 78) ebenfalls noch weiter nach oben gewandert sind. Aufgrund der herrschenden Druckverhältnisse im Spannungserzeugungsmittel 102 ist dessen Ausgang 106 noch weiter nach außen gewandert, so dass die Drehkörper 88, 86 gegenüber der Situation in Figur 2 wieder um die Achse 112 nach unten geschwenkt wurden. Die Trums 118, 120 sind daher gegenüber der Figur 2 nochmals verkürzt und ihre fehlende Länge umschlingt den rückwärtigen Teil des Ballens 116. Dem Bediener des Zugfahrzeugs oder dessen Antriebssteuerung wird ein Signal zum Anhalten gegeben, damit nicht noch mehr Erntegut in die Ballenbildungskammer 26 gelangt. Außerdem kann der Ballen 116 mit einem Wickelmaterial (Garn, Netz oder Folie etc.) umwickelt werden. Der Antrieb für die Walzen und Drehkörper 28, 36, 38, 40, 46, 48, 50, 52, 74, 78, 80, 82, 84, 86, 88 und 90 wird anschließend angehalten und ggf. die hintere Seitenwand 24 seitlich nach außen bewegt. Dann ist der Ballen 116 fertig zum Auswerfen.

In der Figur 4 ist der Träger 92 durch den Aktor 96 um die Achse 94 nach hinten und oben in die Ballenauswurfposition verbracht und der Ballen 116 aus der Ballenbildungskammer 26 ausgeworfen worden. Der Träger 44 befindet sich noch in der Position aus Figur 3 und kann dort durch eine Arretierungseinrichtung 122 gehalten werden. Da der Träger 92 in die Ballenauswurfposition gelangt ist, kann der Ballen 116 durch die Schwerkraft aus der Ballenbildungskammer 26 auf den Erdboden abrollen, vorzugweise auf einer Rutsche (nicht gezeigt). Um die beim Verschwenken des Trägers 92 um die Achse 94 frei werdende Länge des Pressmittels 76 aufzunehmen, ist der Ausgang 106 des Spannungserzeugungsmittels 102 durch eine geeignete Beaufschlagung wieder eingezogen worden, was dazu führt, dass die Drehkörper 86, 88 am zweiten Arm 114 weit nach vorn und oben um die Achse 112 gedreht wurden und sich außerhalb des Gehäuses 22 oberhalb der Rundballenpresse 10 an deren Vorderseite befinden und das Trum 120 sowie das Trum 124 zwischen dem Drehkörper 86 und dem Drehkörper 84 recht lang geworden sind. Dabei ermöglicht der hintere bzw. obere Drehkörper 86 noch eine zusätzliche Aufnahme einer Länge des Pressmittels 76. Der Drehkörper 98 des Trägers 92 bildet in dieser Stellung mit den Drehkörpern 80 und 84 eine Doppelschlaufe des Pressmittels 76, die auch einen Teil der beim Hochschwenken des Trägers 82 in die Ballenauswurfposition frei gewordene Länge des Pressmittels 76 aufnimmt. Nach dem Auswerfen des Ballens 116 kann die Arretierung 122 gelöst und der Träger 92 durch den Aktor 96 wieder in die Ballenbildungsposition, wie sie in den Figuren 1 bis 3 gezeigt ist, verschwenkt werden.

Es sei noch angemerkt, dass eine Steuerung 126 die Funktionen der Rundballenpresse 10 kontrollieren und insbesondere den Aktor 96 und das Spannungserzeugungsmittel 102 über geeignete Ventile ansteuern kann, wie in der Figur 5 dargestellt. Außerdem kann die Steuerung 126 mit einem Sensor (nicht gezeigt) für die Größe und/oder Dichte des Ballens 116 verbunden sein und den Wickelvorgang sowie das Anhalten des Zugfahrzeugs bei einer auswählbaren oder fest vorgegebenen Größe des Ballens 116 (die kleiner als die maximale Größe des Ballens sein kann) selbsttätig veranlassen und die oben beschriebenen Funktionen des Aktors 96, der Arretierung 122 und des Spannungserzeugungsmittels 102 steuern. Bei Ballengrößen, die kleiner als die maximale Ballengröße sind, kann die Arretierung 122 den Träger 44 in der zuletzt eingenommenen Stellung arretieren oder in die höchstmögliche Stellung, wie sie in den Figuren 3 und 4 gezeigt ist, verbringen.

In der Figur 5 ist ein Hydraulikdiagramm der Rundballenpresse 10 dargestellt. Der von einer an Bord des Zugfahrzeugs angeordneten Pumpe 130 bereitgestellte Druck wird über ein vom Bediener des Zugfahrzeugs oder automatisch durch die Steuerung 126 kontrolliertes Steuerventil 132, das sich an Bord der Rundballenpresse 10 befindet, an die Ventilanordnung 134 der Steuerung 126 übergeben. Ein zweiter Anschluss des Steuerventils 132 ist mit einem Tank 136 verbunden. Die beiden Kammern der an beiden Seiten der Rundballenpresse 10 vorgesehenen, als Hydraulikzylinder ausgeführten Aktoren 96 sind jeweils direkt mit einer der Ausgangsleitungen A, B des Steuerventils 132 verbunden. Auch die Kolbenkammer eines Hydraulikzylinders der Arretierung 122 ist direkt mit einer der Ausgangsleitungen A des Steuerventils 132 verbunden. Die Kolbenstangenkammern der an beiden Seiten der Rundballenpresse 10 vorgesehenen, auch als Hydraulikzylinder ausgeführten Spannungserzeugungsmittel 102 sind über ein elektromagnetisch gesteuertes Ventil 138 und ein Durchschlagventil 140 mit einer der Ausgangsleitungen B des Steuerventils 132 verbunden. Das Durchschlagventil 140 dient zur Aufrechterhaltung des Drucks im Spannungserzeugungsmittel 102. Die Kolbenkammern der Spannungserzeugungsmittel 102 sind mit einer Leitung 142 verbunden, die über Durchschlagventile 144, 146 mit den Ausgangsleitungen A, B des Steuerventils 132 verbunden sind, welche jeweils den Fluss in die Kolbenkammern beim Ausziehen des Spannungserzeugungsmittels 102 und aus den Kolbenkammern heraus beim Einziehen ermöglichen. Das Ventil 138 ermöglicht im geöffneten Zustand eine Steuerung des Drucks in der Kolbenstangenkammer des Spannungserzeugungsmittels 102 mittels eines Druckbegrenzungsventils 148, um einen weichen Ballenkern zu erzeugen und im geschlossenen Zustand des Ventils 138 ist ein darin enthaltenes Überströmventil 150 aktiv, das beim Anheben des Trägers 92 durch den Aktor 96 öffnet, um die Spannungserzeugungsmittel 102 einzuziehen. Ein parallel zum Druckbegrenzungsventil 148 zwischen dem Einlass des Ventils 138 und der Leitung 142 geschaltetes Pilotventil 152 ermöglicht die freie Bewegung der Spannungserzeugungsmittel 102 bei ausgestreckten Aktoren 96. Ein weiteres Pilotventil 154 ist zwischen dem Ausgang des Ventils 150 und der Leitung 142 angeordnet und begrenzt den Druck in der Kolbenstangenkammer des Spannungserzeugungsmittels und definiert die Dichte des Ballens. Die dargestellte Hydraulikschaltung ermöglicht die vorhergehend beschriebenen Funktionen der Rundballenpresse 10.

Die erfindungsgemäße Rundballenpresse 10 mit der Antriebsverbindung zwischen dem Halter 44 und den Drehkörpern 86, 88 hat die Vorteile, dass trotz eines möglichst kurzen Pressmittels 76 ein relativ großer Ballen 116 erzeugt werden kann, dass die Drehkörper 86, 88 bei leerer Ballenbildungskammer 26 innerhalb des Umrisses des Gehäuses 22 bleiben und das Pressmittel 76 auch bei in die Ballenauswurfposition verbrachtem Träger 92 noch stramm gehalten wird. Ein weiterer Vorteil der hier beschriebenen Rundballenpresse 10 liegt darin, dass Teile bereits bekannter Rundballenpressen verwendet werden können, wie der Halter 44 mit den Walzen 40, 46, 48, 50, 52 oder der Träger 92.

## Patentansprüche

1. Rundballenpresse (10) zur Herstellung von Ballen (116), mit:
einer Ballenbildungskammer (26),
mindestens einer antreibbaren Walze (46, 48, 50, 52), die einen Teil des Umfangs der Ballenbildungskammer (26) begrenzt und an einem beweglichen Halter (44) befestigt ist, und
einem antreibbaren, endlosen, flexiblen Pressmittel (76), das einen weiteren Teil des Umfangs der Ballenbildungskammer (26) begrenzt und an einem ersten Drehkörper (90) und einem zweiten Drehkörper (88) anliegt, von denen der erste Drehkörper (90) am Halter (44) angebracht ist,
wobei der zweite Drehkörper (88) durch eine die Position des zweiten Drehkörpers (88) zwangsweise mit der Position des Halters (44) koppelnde Antriebsverbindung bewegungsmäßig mit dem Halter (44) gekoppelt ist und der zweite Drehkörper (88) durch ein Spannungserzeugungsmittel (102) vorgespannt ist, um das Pressmittel (76) zu straffen,
**dadurch gekennzeichnet, dass** das Spannungserzeugungsmittel (102) in die Antriebsverbindung zwischen dem Halter (44) und dem zweiten Drehkörper (88) eingefügt ist.

2. Rundballenpresse (10) nach Anspruch 1, **dadurch gekennzeichnet, dass** das Spannungserzeugungsmittel (102) einen Hydraulikzylinder umfasst.

3. Rundballenpresse (10) nach Anspruch 2, **dadurch gekennzeichnet, dass** der Hydraulikzylinder zur Steuerung der Ballendichte mit einem Druckbegrenzungsventil (154) verbunden ist.

4. Rundballenpresse (10) nach einem der Ansprüche 1 bis 3, **dadurch gekennzeichnet, dass** der Halter (44) an seinem unteren, vorderen Ende um eine sich parallel zur Achse der Ballenbildungskammer erstreckende Achse (42) schwenkbar ist.

5. Rundballenpresse (10) nach einem der Ansprüche 1 bis 4, **dadurch gekennzeichnet, dass** die Antriebsverbindung einen am Halter (44) befestigten, ersten Arm (100) umfasst, der sich bei leerer Ballenbildungskammer (26) oberhalb des Halters (44) befindet.

6. Rundballenpresse (10) nach einem der Ansprüche 1 bis 5, **dadurch gekennzeichnet, dass** die Antriebsverbindung einen zweiten Arm (114) umfasst, der um eine gegenüber der Rundballenpresse (10) feste und sich parallel zur Achse der Ballenbildungskammer (26) erstreckende Achse (112) schwenkbar ist und an dem der zweite Drehkörper (88) angebracht ist.

7. Rundballenpresse (10) nach Anspruch 6, **dadurch gekennzeichnet, dass** die Antriebsverbindung einen Hebelarm (110) umfasst, der starr mit dem zweiten Arm (114) verbunden ist.

8. Rundballenpresse (10) nach Anspruch 7, **dadurch gekennzeichnet, dass** der erste Arm (100) um eine sich parallel zur Achse der Ballenbildungskammer (26) erstreckende Achse (104) schwenkbar mit einem Ende des Spannungserzeugungsmittels (102) verbunden ist, und dass der Hebelarm (110) um eine sich parallel zur Achse der Ballenbildungskammer (26) erstreckende Achse (108) schwenkbar mit dem anderen Ende des Spannungserzeugungsmittels (102) verbunden ist.

9. Rundballenpresse (10) nach einem der Ansprüche 1 bis 8, **dadurch gekennzeichnet, dass** sich an das zwischen der ersten Drehkörper (90) und der zweiten Drehkörper (88) erstreckende Trum (120) des Pressmittels (76) weitere Trums (118, 124) anschließen, die an rundballenpressenfesten Drehkörpern (74, 84) anliegen.

10. Rundballenpresse (10) nach einem der Ansprüche 1 bis 9, **dadurch gekennzeichnet, dass** das Pressmittel (76) zwischen zwei mit dem Halter (44) verbundenen Drehkörpern (78, 54) hindurch läuft und an mindestens einer der Drehkörper (78, 54) zum Anliegen kommen kann.

11. Rundballenpresse (10) nach einem der Ansprüche 1 bis 10, **dadurch gekennzeichnet, dass** in ihrem unteren, rückwärtigen Bereich ein um eine sich parallel zur Achse der Ballenbildungskammer erstreckende Achse (94) schwenkbarer Träger (92) positionierbar ist, der zwei Drehkörper (80, 82) trägt, an denen das Pressmittel (76) anliegt, und der durch einen Aktor (96) in eine um die Achse (94) verschwenkte, angehobene Ballenauswurfposition verbringbar ist.

12. Rundballenpresse (10) nach Anspruch 11, **dadurch gekennzeichnet, dass** das Spannungserzeugungsmittel (102) bei in die Ballenauswurfposition verbrachtem Träger (92) in eine eingezogene Position bringbar ist, um das Pressmittel (76) zu straffen.

13. Rundballenpresse (10) nach Anspruch 11 oder 12, **dadurch gekennzeichnet, dass** der Halter (44) bei in die Ballenauswurfposition verbrachtem Träger (92) in seiner bei der Bildung des Ballens (116) zuletzt erreichten Stellung oder einer weitest möglich angehobenen Stellung arretierbar ist.

## Claims

1. Round baler (10) for producing bales (116), with:
a baling chamber (26),
at least one driveable roller (46, 48, 50, 52) which bounds part of the circumference of the baling chamber (26) and is fastened to a movable holder (44), and
a driveable, endless, flexible pressing means (76) which bounds a further part of the circumference of the baling chamber (26) and lies against a first rotary body (90) and a second rotary body (88), of which the first rotary body (90) is attached to the holder (44),
wherein the second rotary body (88) is coupled in terms of movement to the holder (44) by a drive connection which inevitably couples the position of the second rotary body (88) to the position of the holder (44), and the second rotary body (88) is pretensioned by a tension-generating means (102) in order to tighten the pressing means (76),
**characterized in that** the tension-generating means (102) is fitted into the drive connection between the holder (44) and the second rotary body (88).

2. Round baler (10) according to Claim 1, **characterized in that** the tension-generating means (102) comprises a hydraulic cylinder.

3. Round baler (10) according to Claim 2, **characterized in that** the hydraulic cylinder is connected to a pressure-limiting valve (154) for controlling the bale density.

4. Round baler (10) according to one of Claims 1 to 3, **characterized in that** the holder (44) is pivotable at its lower front end about an axis (42) extending parallel to the axis of the baling chamber.

5. Round baler (10) according to one of Claims 1 to 4, **characterized in that** the drive connection comprises a first arm (100) which is fastened to the holder (44) and is located above the holder (44) when the baling chamber (26) is empty.

6. Round baler (10) according to one of Claims 1 to 5, **characterized in that** the drive connection comprises a second arm (114) which is pivotable about an axis (112) which is fixed in relation to the round baler (10) and extends parallel to the axis of the baling chamber (26), and to which arm the second rotary body (88) is attached.

7. Round baler (10) according to Claim 6, **characterized in that** the drive connection comprises a lever arm (110) which is connected rigidly to the second arm (114).

8. Round baler (10) according to Claim 7, **characterized in that** the first arm (100) is connected to one end of the tension-generating means (102) in a manner pivotable about an axis (104) extending parallel to the axis of the baling chamber (26), and **in that** the lever arm (110) is connected to the other end of the tension-generating means (102) in a manner pivotable about an axis (108) extending parallel to the axis of the baling chamber (26).

9. Round baler (10) according to one of Claims 1 to 8, **characterized in that** the strand (120) of the pressing means (76) which extends between the first rotary body (90) and the second rotary body (88) is adjoined by further strands (118, 124) which lie against rotary bodies (74, 84) fixed to the round baler.

10. Round baler (10) according to one of Claims 1 to 9, **characterized in that** the pressing means (76) runs through between two rotary bodies (78, 54) connected to the holder (44) and can come to lie against at least one of the rotary bodies (78, 54).

11. Round baler (10) according to one of Claims 1 to 10, **characterized in that** a carrier (92) can be positioned in the lower, rear region of said round baler, the carrier being pivotable about an axis (94) extending parallel to the axis of the baling chamber and carrying two rotary bodies (80, 82) against which the pressing means (76) lies, and being able to be brought by an actuator (96) into a raised bale-ejection position pivoted about the axis (94).

12. Round baler (10) according to Claim 11, **characterized in that**, when the carrier (92) is brought into the bale-ejection position, the tension-generating means (102) can be brought into a retracted position in order to tighten the pressing means (76).

13. Round baler (10) according to Claim 11 or 12, **characterized in that**, when the carrier (92) is brought into the bale-ejection position, the holder (44) is lockable in its last-reached position or a position raised as far as possible during the formation of the bale (116).

## Revendications

1. Presse (10) à balles rondes servant à former des balles (116) et présentant
une chambre (26) de formation de balles, au moins un cylindre entraîné (46, 48, 50, 52) qui délimite une partie de la périphérie de la chambre (26) de formation de balles et qui est fixé sur un support mobile (44),
un moyen de poussée (76) entraîné, flexible et sans fin, qui délimite une autre partie de la périphérie de la chambre (26) de formation de balles et qui repose sur un premier corps rotatif (90) et un deuxième corps rotatif (88), parmi lesquels le premier corps rotatif (90) est placé sur le support (44),
le deuxième corps rotatif (88) étant accouplé à déplacement forcé au support (44) par une liaison d'entraînement qui accouple la position du deuxième corps rotatif (88) à la position du support (44) et le deuxième corps rotatif (88) étant précontraint par un moyen (102) d'application d'une contrainte pour serrer le moyen de poussée (76),
**caractérisée en ce que**
le moyen (102) d'application d'une contrainte est inséré dans la liaison d'entraînement entre le support (44) et le deuxième corps rotatif (88).

2. Presse (10) à balles rondes selon la revendication 1, **caractérisée en ce que** le moyen (102) d'application d'une contrainte comporte un vérin hydraulique.

3. Presse (10) à balles rondes selon la revendication 2, **caractérisée en ce que** le vérin hydraulique est relié à une soupape (154) de limitation de pression qui commande la densité des balles.

4. Presse (10) à balles rondes selon l'une des revendications 1 à 3, **caractérisée en ce que** le support (44) peut pivoter à son extrémité inférieure avant autour d'un axe (42) qui s'étend parallèlement à l'axe de la chambre de formation de balles.

5. Presse (10) à balles rondes selon l'une des revendications 1 à 4, **caractérisée en ce que** la liaison d'entraînement comporte un premier bras (100) fixé sur le support (44) et situé au-dessus du support (44) lorsque la chambre (26) de formation de balles est vide.

6. Presse (10) à balles rondes selon l'une des revendications 1 à 5, **caractérisée en ce que** la liaison d'entraînement comporte un deuxième bras (114) qui peut pivoter autour d'un axe (112) fixe par rapport à la presse (10) à balles rondes et qui s'étend parallèlement à l'axe de la chambre (26) de formation de balles, et sur lequel est installé le deuxième corps rotatif (88).

7. Presse (10) à balles rondes selon la revendication 6, **caractérisée en ce que** la liaison d'entraînement comporte un bras de levier (110) relié rigidement au deuxième bras (114).

8. Presse (10) à balles rondes selon la revendication 7, **caractérisée en ce que** le premier bras (100) est relié à une extrémité du moyen (102) d'application d'une contrainte de manière à pivoter autour d'un axe (104) qui s'étend parallèlement à l'axe de la chambre (26) de formation de balles et **en ce que** le bras de levier (110) est relié à pivotement autour d'un axe (108) qui s'étend parallèlement à l'axe de la chambre (26) de formation de balles à l'autre extrémité du moyen (102) d'application d'une contrainte.

9. Presse (10) à balles rondes selon l'une des revendications 1 à 8, **caractérisée en ce que** des tambours (118, 124) qui reposent contre les corps de roulement (74, 84) fixes par rapport à la presse à balles rondes se raccordent au tambour (120) du moyen de poussée (76) qui s'étend entre le premier corps rotatif (90) et le deuxième corps rotatif (88).

10. Presse (10) à balles rondes selon l'une des revendications 1 à 9, **caractérisée en ce que** le moyen de poussée (76) s'étend à travers deux corps rotatifs (78, 54) reliés au support (44) et peut venir se placer contre au moins l'un des corps rotatifs (78, 54).

11. Presse (10) à balles rondes selon l'une des revendications 1 à 10, **caractérisée en ce que** dans sa partie arrière inférieure, un support (92) apte à pivoter autour d'un axe (94) qui s'étend parallèlement à l'axe de la chambre de formation de balles peut être placé et porte deux corps rotatifs (80, 82) sur lesquels repose le moyen de poussée (76), et qui peut être amené par un actionneur (96) dans une position relevée d'expulsion des balles inclinée par rapport à l'axe (94).

12. Presse (10) à balles rondes selon la revendication 11, **caractérisée en ce que** le moyen (102) d'application d'une contrainte peut être amené lorsque le support (92) est amené dans une position d'expulsion des balles dans une position rétractée pour serrer le moyen de poussée (76).

13. Presse (10) à balles rondes selon l'une des revendications 10 ou 11, **caractérisée en ce que** lorsque le support (92) est amené dans sa position d'expulsion des balles, le support (44) peut être bloqué dans sa position atteinte en dernier lieu lors de la formation de la balle (116) ou la position la plus relevée possible.
